# EUROPÄISCHE PATENTSCHRIFT

(11) **EP 0 991 136 B1**
(45) Veröffentlichungstag und Bekanntmachung des Hinweises auf die Patenterteilung: **27.08.2008**
(21) Anmeldenummer: 99118659.4
(22) Anmeldetag: 22.09.1999
(51) Int. Cl.: H01Q 17/00, H05B 6/64, B29C 65/00, B29C 65/20

(54) **Vorrichtung und Verfahren zum Erwärmen von Bauteilen aus mikrowellenabsorbierendem Kunststoff**
Device and method for heating of components made of microwaves absorbing synthetic material
Dispositif et procédé de chauffer de composants en matière plastique et absorbante de micro-ondes

(30) Priorität: 29.09.1998 DE 19844549
(43) Veröffentlichungstag der Anmeldung: 05.04.2000
(73) Patentinhaber: Fraunhofer-Gesellschaft zur Förderung der angewandten Forschung e.V., 80686 München (DE)
(72) Erfinder: Emmerich, Rudolf, Dr., 76646 Bruchsal (DE); Mügge, Horst, 64385 Reichelsheim (DE); Dommer, Armin, 71254 Ditzingen (DE); Jauss, Michael, 72116 Mössingen (DE)
(74) Vertreter: Ostermann, Dirk

(56) Entgegenhaltungen:
- EP-A- 0 792 085
- DE-A- 2 844 128
- GB-A- 2 240 980
- US-A- 4 339 295
- US-A- 5 254 824
- US-A- 5 457 303
- PATENT ABSTRACTS OF JAPAN vol. 1996, no. 03, 29. März 1996 (1996-03-29) -& JP 07 310887 A (SEKISUI CHEM CO LTD), 28. November 1995 (1995-11-28)

## Beschreibung

Die vorliegende Erfindung betrifft eine Vorrichtung zum Erwärmen von Bauteilen aus mikrowellenabsorbierendem Kunststoff bzw. aus Kunststoffen, die mikrowellenabsorbierende Additive enthalten, mit einem Mikrowellengenerator, der Mikrowellen einer bestimmten Wellenlänge erzeugt, mit einer Antenne zu der die Mikrowellen geleitet werden, die wenigstens ein freies Ende aufweist, und mit einer Einrichtung zur Abschirmung, welches rohrförmig ausgebildet ist, einen lunendurchmesser kleiner als die Hülfte der Wellen Länge hat und die Antenne umgibt. Zudem betrifft die Erfindung ein Verfahren zum Erwärmen von Bauteilen aus mikrowellenabsorbierendem Kunststoff.

Unter Mikrowellen versteht man elektromagnetische Strahlung im Frequenzbereich von etwa 300 MHz bis 300 GHz, die mit Hilfe von Mikrowellengeneratoren erzeugt wird. Von einem Mikrowollengenerator aus werden die Mikrowellen durch einen Hohlleiter oder ein Koaxialkabei an ihren Einsatzort geleitet, wo sie beispielsweise mittels einer Antenne, die mindestens um den vierten Teil der Wellenlänge in eine abgeschirmte Kammer hineinragt, ausgekoppelt werden. In der Kammer wechselwirken die Mikrowellen mit den zu erwärmenden Bauteilen.

Zur Erwärmung von Bauteilen mittels Mikrowellen unterscheidet man dabei prinzipiell zwei verschiedene Vorrichtungen:

Bei der einen Vorrichtung werden die Mikrowellen in eine Kammer eingestrahlt, deren Dimensionen viel größer als die Wellenlänge sind. Die Mikrowellen werden an den Wänden der Kammer reflektiert und überlagern sich zu einer komplexen Feldverteilung (Multimode). In einer solchen Kammer lassen sich die Mikrowellen jedoch nicht räumlich konzentrieren, so daß eine definierte Erwärmung bestimmter Abschnitte des Bauteils nicht möglich ist. Die Kammer hat dabei die Aufgabe, die Feldverteilung festzulegen und den Betreiber der Vorrichtung vor den Mikrowellen zu schützen.

Bei der anderen Vorrichtung werden die Mikrowellen in eine Kammer eingestrahlt, deren Dimensionen etwa der Wellenlänge entsprechen, so daß sich innerhalb der Kammer eine definierte Feldverteilung ausbildet (Monomode). Mit einer solchen Kammer ist eine definierte räumliche Erwärmung der Bauteile aber nur bedingt erreichbar, da diese Feldverteilung räumlich inhomogen ist. Die Kammer hat dort also die Funktion, die Feldverteilung zu definieren und den Betreiber der Vorrichtung wiederum vor den Mikrowellen zu schützen.

Darüber hinaus ist aus der Druckschrift JP 07 310887 A ein Mikrowellengerät zum Erwärmen eines Verbindungsstücks für Kunststoffrohre bekannt. Das Mikrowellengerät besteht aus einer weitgehend offenen Anordnurg einer die Mikrowellen abstrahlenden Antenne, einem auf die Antenne fokusierten Reflektor und einer koaxial zu dem T-förmigen Verbindungsstück positionierten als Rohrhälfte ausgebildeten Absorptionseinrichtung. Beim Aufschweißen des Verbindungsstücks auf die Kunststoffrohre wird das aus einem mikrowellenabsorbierenden Material bestehende Verbindungsstück im Ganzen erwärmt, während die aus einem nicht mikrowellenabsorbierenden Material bestehenden Kunststoffrohre nicht oder allenfalls in den an das Verbindungsstück angrenzenden Bereichen erwärmt werden.

Die Druckschrift US 5,254,824 beschreibt hingegen ein Verbindungselement und ein Verfahren zum Verbinden von Kunststoffrohren mittels Mikrowellen. Das muffenartige Verbindungselement weist in seinem Innern einen Streifen oder eine Hülse mit einer thermoplastischen Matrix auf, die mit dem thermoplastischen Material der Rohre mischbar ist, und die eine Anzahl von mikrowellenabsorbierenden Partikeln beinhaltet, welche innerhalb der Matrix verteilt sind. Das Verfahren umfaßt die Positionierung des Verbindungselementes an bzw. auf den Rohren und die Anwendung von Mikrowellenenergie, um die mikrowellenabsorbierenden Partikel zu erwärmen und die thermoplastische Matrix des Verbindungselementes mit dem thermoplastischen Material der angrenzenden Rohre zu verschweißen.

In der Druckschrift US 4,339,295 ist ein Verfahren zum Verbinden zweier Materialien unter Verwendung von Mikrowellenenergie geoffenbart. Dazu wird ein Hydrogelkleber zwischen die beiden zu verbindenden Materialien eingebracht und werden diese innerhalb einer abgeschlossenen Kammer via eines Hohlleiters mit der von einem Mikrowellengenerator erzeugten Mikrowellenenergie beaufschlagt. Das bedeutet, daß hierfür ein spezieller mikrowellenabsorbierender Hydrogelkleber erforderlich ist, so daß die Verbindung der beiden Materialien nur über die Kleberschicht erfolgt.

Deswelteren ist aus der Druckschrift GB 2240980 A ein Verfahren zur Herstellung von Verbindungen bei vulkanisierten Gummiartikeln, wie beispielsweise Dichtungen, bekannt. Bei diesem Verfahren wird in einem ersten Schritt ein mikrowellenabsorbierendes Verbindungsmaterial auf die Kontaktflächen aufgebracht und wird in einem zweiten Schritt das Verbindungsmaterial mittels Mikrowellen erwärmt, wobei die beiden Kontaktflächen unter Einwirkung einer Kraft zusammengepreßt werden. Zur Erwärmung des Verbindungsmaterials wird der Gummiartikel in eine von Mikrowellen durchsetzte Kammer eingesetzt.

Ferner ist in der Druckschrift DE 28 44 128 A1 ein Mikrowellenofen zur Erwärmung von Speisen beschrieben, welcher eine im wesentlichen L-förmige, vorzugsweise drehbare Antenne aufweist, die durch eine Öffnung in cen abgeschlossenen Ofenraum hineinragt.

Die Druckschrift US 5,457,303 offenbart einen besonders effizient arbeitenden Mikrowellenofen mit einem elektrisch leitenden Förderband und einem aus einem Wellenleiter und einer Antenne gebildeten Mikrowellenapplikator. Dieser Mikrowellenapplikator erzeugt im Bereich oberhalb des die zu erwärmenden Objekte transportierenden Förderbandes ein elektromagnetisches Feld, dessen Polarisationsebene im wesentlichen senkrecht zum Förderband ausgerichtet ist. Durch das elektrisch leitende Förderband und durch das weitgehend homogene elektromagnetische Feld wird eine besonders schnelle und vollständige Erwärmung der Objekte erreicht.

Schließlich ist aus der Druckschrift EP 0 792 085 A2 eine Vorrichtung und ein Verfahren zum Erwärmen von Objekten mittels Mikrowellen entnehmbar, wobei die Mikrowellen über zwei getrennte und letztendlich in entgegengesetzter Richtung verlaufende Wellenleiter zu einer dazwischen angeordneten, rohrförmigen Arbeitskammer geführt sind. Dadurch bildet sich innerhalb der Arbeitskammer eine stehende Welle aus, die verschoben werden kann, indem die Phase der Mikrowellen in einem der beiden Wellenleiter variiert wird. Die zu erwärmenden Objekte werden senkrecht zur Ausbreitungsrichtung der Mikrowellen durch die Arbeitskammer hindurchgeführt, wobei sie jeweils an einander gegenüberliegenden Seiten von den Mikrowellen beaufschlagt werden. Dadurch ergeben sich innerhalb der Objekte komplexe Interferenzmuster, welche zusammen mit der Phasenänderung der stehenden Welle eine effiziente Erwärmung der Objekte im Ganzen bewirken.

Mit diesen Vorrichtungen aus dem Stand der Technik können die Bauteile also nur im Ganzen oder in inhomogen Abschnitten erwärmt werden, was für die meisten Anwendungsfälle aber nicht erforderlich bzw. nicht erwünscht ist. Zudem ist bei diesen Vorrichtungen die Realisierung einer für das Einbringen der Bauteile in die abgeschirmte Kammer notwendigen Öffnung aufwendig, da solche Öffnungen dort nur mittels Türen oder Mikrowellenabsorbem realisierbar sind.

Vor diesem Hintergrund ist es Aufgabe der vorliegenden Erfindung ausgehend von einer Vorrichtung gemäß der Druckschrift EP 0 792 085 A2, eine Vorrichtung zum Erwärmen von Bauteilen aus mikrowellenabsorbierenden Kunststoffen zu konzipieren, welche selbst eine räumlich begrenzte und dennoch homogene Erwärmung der Bauteile erlaubt. Zudem soll bei dieser Vorrichtung auf einfache Weise eine Öffnung für die einzubringenden Bauteile geschaffen werden. Darüber hinaus soll ein Verfahren zum Erwärmen von Bauteilen aus mikrowellen absorbierendem Kunststoff bereitgestellt werden.

Vorrichtungsgemäß wird die Aufgabe wird durch eine Vorrichtung zum Erwärmen von Bauteilen aus mikrowellenabsorbierenden Kurststoffen mit den Merkmalen des Anspruchs 1 gelöst.

Indem die Einrichtung zur Abschirmung über aus freie Ende der Antenne hinausragt und eine stimseitige Öffnung aufweist, ist eine Öffnung geschaffen, durch welche die zu erwärmenden Bauteile in die Zone zwischen dem freien Ende der Antenne und der Einrichtung einführbar sind. Diese Öffnung muß während der Erwärmung der Bauteile nicht verschlossen werden, da auf diesem Weg ja praktisch keine Mikrowellen in den freien Raum abgestrahlt werden können. Dies eröffnet die Möglichkeit, daß das Bauteil nur abschnittsweise in die Zone zwischen der Einrichtung und der Antenne eingeführt und auch nur abschnittsweise erwärmt wird, während der Rest des Bauteils, der auch aus der Öffnung herausragen darf, nicht erwärmt wird.

Vorteilhaft sind die rohrförmige Einrichtung zur Abschirmung und das freie Ende der Antenne koaxial zueinander augeordnet, wobei die Zone zwischen dem freien Ende der Antenne und der rohrförmigen Einrichtung zur Abschirmung in einem Bereich besonders schmal ausgebildet ist, um die in die Zone eingeführten Bauteile in eben diesem Bereich räumlich begrenzt bzw. genau definiert zu erwärmen. Denn indem die Bauteile außerhalb des genau definierten Bereichs kühl bleiben, ist beim Verschweißen, Verformen oder Vernetzen erstmals eine gute Handhabung der Bauteile realisiert. Zudem kann die aufgebrachte Mikrowellenenergie dabei auch äußerst effizient genutzt werden.

Damit sich im freien Raum keine Mikrowellen ausbreiten können, sollte das freie Ende der Antenne von der Einrichtung zur Abschirmung um mindestens ein Viertel der Wellenlänge, der von dem Mikrowollengenerator erzeugten Mikrowellen, überragt werden. Denn mit diesem Merkmal wird eine Abstrahlung der Mikrowellen In den Raum zuverlässig unterbunden. Wird das freie Ende der Antenne von der Einrichtung zur Abschirmung hingegen nur um ein geringeres Maß überragt, so wird die Abstrahlung der Mikrowellen nicht mehr ganz so zuverlässig unterbunden. Eine effektive Erwärmung der Bauteile ist jedoch in beiden Fällen möglich,

Zweckmäßig ist die Zone zwischen dem freien Ende der Antenne und der Einrichtung zur Abschirmung in Abhängigkeit von den Abmessungen der zu erwärmenden Bauteile dimensioniert. Dabei gilt grundsätzlich, um so schmäler die Zone bzw. geringer der Abstand zwischen dem freien Ende der Antenne und der Einrichtung zur Abschirmung ist, desto stärker ist das elektromagnetische Feld ausgeprägt. Mit einem solchen starken elektromagnetischen Feld wird eine hohe Energiedichte und damit eine optimale Ausnutzung der eingebrachten Energie erreicht. Es sollte jedoch darauf geachtet werden, daß ein berührungsloses Einführen der Bauteile in die Zone möglich ist, um insbesondere bei einer Erwärmung der Bauteile über die Schmelztemperatur eine Verschmutzung der Vorrichtung zu vermeiden. Außerdem gilt, um so länger die Zone ist, desto größer kann der räumlich begrenzte bzw. der genau definierte Abschnitt des Bauteils sein, der erwärmt wird.

Besonders vorteilhaft sind die in die Zone eingeführten Bauteile innerhalt des schmalen Bereichs in Abhängigkeit von den jeweiligen Erfordernissen erwärmbar, so daß je nachdem, ob ein Verschweißen, Verformen oder Vernetzen stattfinden soll, eine hierzu geeignete Erwärmung der Bauteile durchgeführt werden kann.

Ist zwischen der Antenne und der Einrichtung zur Abschirmung ein Dielektrikum vorgesehen, so kann dies zur optimalen Positionierung der zu erwärmenden Bauteile dienen, da durch das Dielektrikum festgelegt wird, wie weit die Bauteile in die Vorrichtung eingeführt werden können. Außerdem stellt solch ein Dielektrikum für die zu erwärmenden Bauteile eine kalte Anlagefläche dar, was beispielsweise beim Verschweißen von rohrförmigen Bauteilen einen übermäßigen Schweißwulst an den Innenseiten verhindern kann.

In einer bevorzugten ersten Ausführungsform der Erfindung ist das freie Ende der Antenne kegelförmig ausgebildet. Das sich In der Zone zwischen dem freien Ende der Antenne und der Einrichtung zur Abschirmung ausbildende elektromagnetische Feld ist hierbei im schmälsten Bereich der Zone am stärksten ausgebildet, wodurch sich diese Zone in besonderer Weise zum Verschweißen von Bauteilen eignet. Dazu können zwei miteinander zu verschweißende Bauteile mit einer Stirr seite in die Zone zwischen dem freien Ende der Antenne und der Einrichtung zur Abschirmung eingeführt, erwärmt und anschließend miteinander verschweißt werden. In einer Weiterbildung dieser Ausführungsform kann die Vorrichtung zum Verschweißen von rohrförmigen Bauteilen eine Antenne mit zwei freien Enden aufweisen, um die Stirnseiten der beiden miteinander zu verschweißenden Rohre gleichzeitig bis über die Schmelztemperatur zu erwärmen. Die beiden freien Enden der Antenne sollten dabei in einander entgegengesetzte Richtungen weisen.

Gemäß einer zweiten Ausführungsform der Erfindung ist das freie Ende der Antenne domförmig ausgebildet. Das domförmige Ende der Antenne dient dabei zum Aufweiten von rohrförmigen Bauteilen, die auf das freie Ende der Antenne aufgeschoben und innerhalb der Zone zwischen dem freien Ende der Antenne und der Einrichtung zur Abschirmung bis über die Verformungstemperatur erwärmt werden.

Verfahrensgemäß wird die Aufgabe durch die Verwendung der erfindungsgemäßen Vorrichtung zum Erwärmen von Bauteilen aus mikrowellenabsorbierendem Kunststoff gemäβ Anspruch 8 gelöst.

Dabei können die Bauteile in der Zone zwischen dem freien Ende der Antenne und der Einrichtung zur Abschirmung, über die Schmelztemperatur hinaus erwärmt und miteinander verschweißt oder über die plastische Verformungstemperatur hinaus erwärmt und bleibend verformt oder über die Vernetzungstemperatur hinaus erwärmt und vernetzt werden. Die Vernetzung erfolgt dabei durch die thermische Zersetzung eines Radikalbildners.

Die vorliegende Erfindung wird unter Bezugnahme auf die nachfolgenden Zeichnungsfiguren näher erläutert. Es zeigen:
- Figur 1: eine schematische Darstellung der erfindungsgemaßen Vorrichtung mit einem Mikrowellengenerator, einem Hohlleiter, einer Einrichtung zur Einkopplung, einer Antenne und einer Einrichtung zur Abschirmung;
- Figur 2: eine erste bevorzugte Ausführungsform von Antenne und Einrichtung zur Abschirmung zum Schweißen rohrförmiger Bauteile; und
- Figur 3: eine zweite Ausführungsform von Antenne und abschirmender Einrichtung zum Aufweiten rohrförmiger Bauteile.

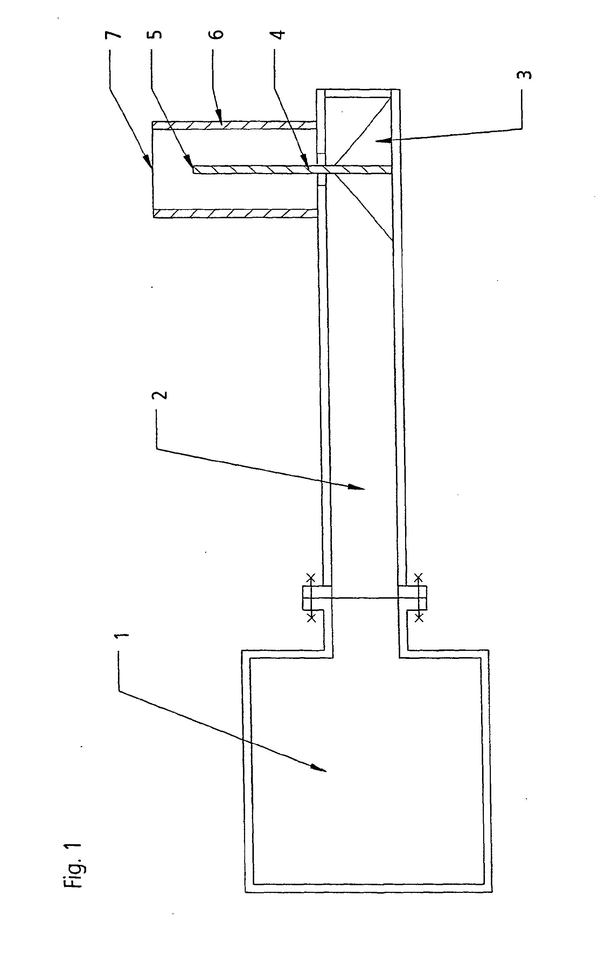

In Figur 1 ist die gesamte Vorrichtung dargestellt. Der Mikrowellengenerator 1 dieser Vorrichtung erzeugt im vorliegenden Fall Mikrowellen einer Frequenz von 2.45 GHz und einer Wellenlänge von ca. 120 mm. Vom Mikrowellengenerator 1 gelangen die Mikrowellen über einen Hohlleiter 2 zu einer Einrichtung zur Einkopplung 3 und über diese Einrichtung zur Einkopplung 3 schließlich zu einer Antenne 4. Damit die Antenne 4 keine Mikrowellen in den freien Raum abstrahlen kann, ist eine aus Metall bestehende rohrförmige Einrichtung zur Abschirmung 6 vorgesehen. Diese Einrichtung 6 hat einen Innendurchmesser von ca. 40 mm - also kleiner als die Hälfte der Wellenlänge - und ragt um mindestens 30 mm - also ein Viertel der Wellenlänge - über das freie Ende 5 der Antenne 4 hinaus. Die rohrförmige Einrichtung 6 weist außerdem eine endständige Öffnung 7 auf. Durch die Öffnung 7 können zu erwärmende Bauteile 8 aus mikrowellenabsorbierendem Kunststoff, wie zum Beispiel Polyamid, Polyvinylchlorid oder Polyvinylidenfluorid, in die Zone 9 zwischen dem freien Ende 5 der Antenne 4 und der Einrichtung zur Abschirmung 6 eingeführt werden. Die Zone 9 ist dabei vorteilhaft in Abhängigkeit von der Größe der zu erwärmenden Bauteile 8 bzw. in Abhängigkeit von der Größe der zu erwärmenden Bereiche der Bauteile 8 dimensioniert. Bauteile aus anderen, insbesondere elektrisch leitfähigen Materialien sollten hingegen nicht in die Vorrichtung eingeführt werden, da diese das Austreter von Mikrowellen aus der Vorrichtung ermöglichen könnten.

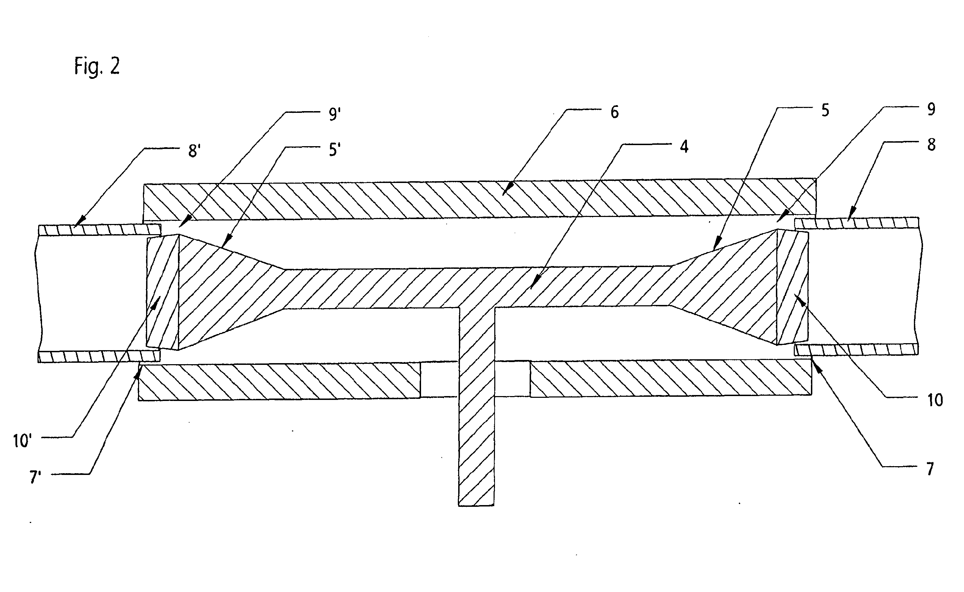

Zum Verschweißen von zwei rohrförmigen Bauteilen 8, 8' sollte die Antenne 4, wie in Figur 2 gezeigt, in der rohrförmigen Einrichtung zur Abschirmung 6 koaxial angeordnet sein und zwei sich kegelförmig aufweitende Enden 5, 5' aufweisen. Dadurch sind die beiden Zonen 9, 9' zwischen den freien Enden 5, 5' der Antenne 4 und der Einrichtung zur Abschirmung 6 in einem ringförmigen Bereich jeweils besonders schmal. n diesen Bereichen werden besonders hohe elektromagnetische Feldstärken erzeugt und findet daher auch eine besonders starke Erwärmung der eingeführten Bauteile 8, 8' statt. Die Abschnitte der Bauteile 8, 8', die außerhalb der Zone 9 liegen, werden hingegen nicht erwärmt. Nachdem die rohrförmigen Bauteile 8, 8' an einer Stirnseite bis über die Schmelztemperatur erwärmt sind, werden die Bauteile 8, 8' aus der Vorrichtung herausgezogen, wird der dargestellte Teil der Vorrichtung weggeschwenkt und werden die rohrförmigen Bauteile 8, 8' an ihren aufgeschmolzenen Stirnseiten durch Zusammenpressen miteinander verschweißt. Damit die rohrförmigen Bauteile 8, 8' in der Vorrichtung optimal positionierbar sind, ist an den freien Enden 5, 5' der Antenne 4 jeweils ein konisch ausgebildetes Dielektrikum 10, 10' vorgesehen, das auf die Abmessungen der zu erwärmenden Bauteile 8, 8' abgestimmt ist. Hierbei dienen die Dielektrika 10, 10' außerdem zur Kühlung der Innenseiten der rohrförmigen Bauteile 8, 8', um beim Verschweißen einen nach innen gerichteten Schweißwulst zu verhindern.

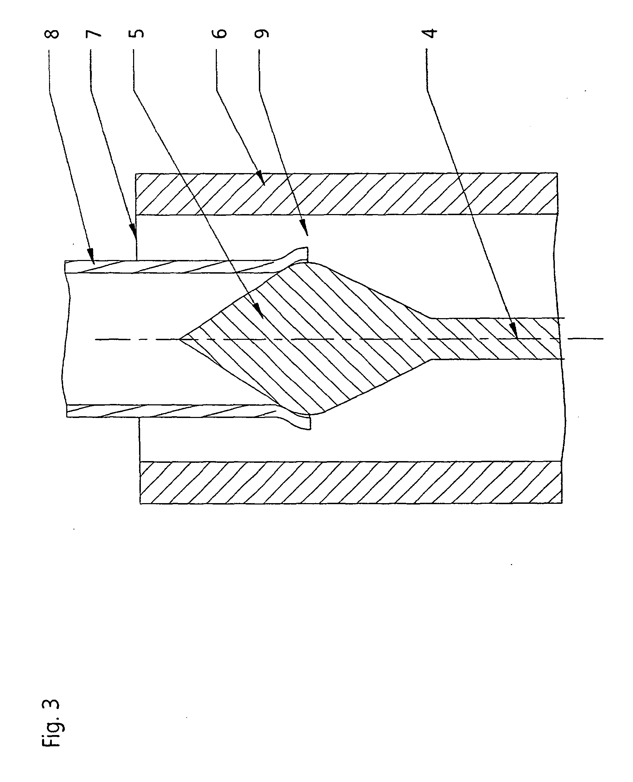

Zum Aufweiten von rohrförmigen Bauteilen 8 sollte die Antenne 4, wie in Figur 3 gezeigt, ebenfalls koaxial in der rohrförmigen Einrichtung zur Abschirmung 6 angeordnet sein und ein rotationssymmetrisches, dornförmiges Ende 5 aufweisen. Auch bei dieser Ausführungsform ist die Zone 9 zwischen dem freien Ende 5 der Antenne 4 und der Einrichtung zur Abschirmung 6 in einem ringförmigen Bereich besonders schmal, wodurch in diesem Bereich wiederum besonders hohe elektromagnetische Feldstärken herrschen, die das in die Zone 9 eingeführte und mechanisch aufgeweitete Bauteil 8 über die plastische Verformungstemperatur erwärmen und damit bleibend verformen.

Bei allen Ausführungsformen gilt, daß die Form des freien Endes der Antenne und der Durchmesser der Einrichtung zur Abschirmung die Ausdehnung der Zone bestimmen. Weisen die Antenne und die Einrichtung zur Abschirmung einen geringen Abstand zueinander auf, so hat dies eine schmale Zone zur Folge, während ein großer Abstand eine breite Zone zur Folge hat. Zudem führt ein freies Ende der Antenne mit einer weichen Kontur zu einer langen Zone, wohingegen ein freies Ende der Antenne mit einer scharfen Kontur zu einer kurzen Zone führt.

## Patentansprüche

1. Vorrichtung zum Erwärmen von Bauteilen aus mikrowellenabsorbierandem Kunststoff, mit
- einem Mikrowellengenerator (1), der Mikrowellen einer bestimmten Wellenlänge erzeugt,
- einer Antenne (4) zu der die Mikrowellen geleitet werden, die wenigstens ein freies Ende aufweist, und
- einer Einrichtung zur Abschirmung (6), welche rohrförmig ausgebildet ist, einen Innendurchmesser kleiner als die Hälfte der Wellenlänge hat und die Antenne (4) umgibt,
**dadurch gekennzeichnet, daß**
die rohrförmige Einrichtung zur Abschirmung (6) über das freie Ende (5) der Antenne (4) hinausragt und eine stirnseitige Öffnung (7) zum Einführen der Bauteile (8) aufweist, und
die rohrförmige Einrichtung zur Abschirmung (6) und das freie Ende (5) der Antenne (4)koaxial zueinander angeordnet sind, wobei die Zone (9) zwischen der rohrförmigen Einrichtung zur Abschirmung (6) und dem freien Ende (5) der Antenne (4) in einem Bereich besonders schmal ausgebildet ist, so daß die in die Zone (9) eingeführten Bauteile (8) in eben diesem Bereich räumlich begrenzt bzw. genau definiert erwärmbar sind.

2. Vorrichtung nach Anspruch 1, **dadurch gekennzeichnet, daß** das freie Ende (5) der Antenne (4) von der rohrförmigen Einrichtung zur Abschirmung (6) um mindestens ein Viertel der Wellenlänge übernagt wird.

3. Vorrichtung nach Anspruch 1 oder 2, **dadurch gekennzeichnet, daß** die Zone (9) zwischen dem freien Ende (5) der Antenne (4) und der Einrichtung zur Abschirmung (6) in Abhängigkeit von den Abmessungen der zu erwärmenden Bauteile (8) dimensioniert ist.

4. Vorrichtung nach einem der Ansprüche 1-3, **dadurch gekennzeichnet, daß** die in die Zone (9) eingeführten Bauteile (8) innerhalb des schmalen Bereichs in Abhängigkeit von den jeweiligen Erfordernissen erwärmbar sind.

5. Vorrichtung nach einem der Ansprüche 1 bis 4, **dadurch gekennzeichnet, daß** zwischen der Antenne (4) und der Einrichtung zur Abschirmung (6) ein Dielektrikum (10) vorgesehen ist.

6. Vorrichtung nach einem der Ansprüche 1 bis 5, **dadurch gekennzeichnet, daß** das freie Ende (5) der Antenne (4) kegelförmig ausgebildet ist.

7. Vorrichtung nach einem der Ansprüche 1 bis 5, **dadurch gekennzeichnet, daß** das freie Ende (5) der Antenne (4) dornförmig ausgebildet ist.

8. Verfahren zum Erwärmen von Bauteilen aus mikrowellenabsorbierendem Kunststoff unter Verwendung einer Vorrichtung gemäß einem der Ansprüche 1 bis 7,
**dadurch gekennzeichnet, daß**
die in die Zone (9, 9') der Vorrichtung eingeführten Bauteile (8, 8') in dem schmal ausgebildeten Bereich räumlich begrenzt bzw. genau definiert erwärmt werden.

9. Verfahren nach Anspruch 8, **dadurch gekennzeichnet, daß** die Bauteile (8, 8') in der Zone (9, 9') zwischen dem freien Ende (5, 5') der Antenne (4) und der Einrichtung zur Abschirmung (6), über die Schmelztemperatur hinaus erwärmt und miteinander verschweißt werden.

10. Verfahren nach Anspruch 8, **dadurch gekennzeichnet, daß** die Bauteile (8) in der Zone (9) zwischen dem freien Ende (5) der Antenne (4) und der Einrichtung zur Abschirmung (6), über die plastische Verformungstemperatur hinaus erwärmt und bleibend verformt werden.

11. Verfahren nach Anspruch 8, **dadurch gekennzeichnet, daß** die Bauteile (8) in der Zone (9) zwischen dem freien Ende (5) der Antenne (4) und der Einrichtung zur Abschirmung (6), über die Vernetzungstemperatur hinaus erwärmt und vernetzt werden.

## Claims

1. Device for heating components made of microwave-absorbing plastics material, comprising
- a microwave generator (1) which generates microwaves of a particular wavelength,
- an antenna (4) to which the microwaves are sent, which has at least one free end, and
- a shielding device (6) which is formed in the shape of a tube, has an inner diameter less than half of the wavelength, and surrounds the antenna (4),
**characterised in that**
the tubular shielding device (6) projects beyond the free end (5) of the antenna (4) and has an opening (7) in the end face for introducing components (8), and
the tubular shielding device (6) and the free end (5) of the antenna (4) are arranged coaxial to one another, the zone (9) between the tubular shielding device (6) and the free end (5) of the antenna (4) being formed so as to be particularly narrow in one region in such a way that the components (8) introduced into said zone (9) can be heated in this same region in a spatially delimited or precisely defined manner.

2. Device according to claim 1, **characterised in that** the tubular shielding device (6) projects beyond the free end (5) of the antenna (4) by at least one quarter of the wavelength.

3. Device according to either claim 1 or claim 2, **characterised in that** the zone (9) between the free end (5) of the antenna (4) and the shielding device (6) is dimensioned according to the dimensions of the components (8) to be heated.

4. Device according to any one of claims 1 to 3, **characterised in that** the components (8) introduced into the zone (9) can be heated within the narrow area in accordance with the respective requirements.

5. Device according to any one of claims 1 to 4, **characterised in that** a dielectric (10) is provided between the antenna (4) and the shielding device (6).

6. Device according to any one of claims 1 to 5, **characterised in that** the free end (5) of the antenna (4) is formed so as to be conical.

7. Device according to any one of claims 1 to 5, **characterised in that** the free end (5) of the antenna (4) is formed so as to be in the shape of a pin.

8. Method for heating components made of microwave-absorbing plastics material using a device according to any one of claims 1 to 7,
**characterised in that**
the components (8, 8') introduced into the zone (9, 9') of the device are warmed in the region formed so as to be narrow in a spatially delimited or precisely defined manner.

9. Method according to claim 8, **characterised in that** the components (8, 8') are heated to above melting point and welded together in the zone (9, 9') between the free end (5,5') of the antenna (4) and the shielding device (6).

10. Method according to claim 8, **characterised in that** the components (8) are heated to above the plastic deformation temperature and undergo permanent deformation in the zone (9) between the free end (5) of the antenna (4) and the shielding device (6).

11. Method according to claim 8, **characterised in that** the components (8) are heated to above the crosslinking temperature and are crosslinked in the zone (9) between the free end (5) of the antenna (4) and the shielding device (6).

## Revendications

1. Dispositif pour chauffer des composants de matière plastique absorbant les micro-ondes comprenant :
- un générateur de micro-ondes (1) qui génère des micro-ondes d'une longueur d'onde déterminée,
- une antenne (4) recevant les micro-ondes et ayant au moins une extrémité libre et
- une installation tubulaire, formant écran (6), dont le diamètre intérieur est inférieur à la longueur d'onde et qui entoure l'antenne (4),
**caractérisé en ce que**
l'installation tubulaire formant l'écran (6) dépasse de l'extrémité libre (5) de l'antenne (4) et comporte une ouverture frontale (7) pour introduire les composants (8) et
l'installation tubulaire formant écran (6) et l'extrémité libre (5) de l'antenne (4) sont coaxiales, la zone (9) entre l'installation tubulaire formant écran (6) et l'extrémité libre (5) de l'antenne (4) étant particulièrement étroite dans une région, de façon que les composants (8) introduits dans la zone (9) puissent être chauffés dans cette zone de façon limitée en volume et d'une manière définie précisément.

2. Dispositif selon la revendication 1,
**caractérisé en ce que**
l'extrémité libre (5) de l'antenne (4) est dépassée par l'installation tubulaire formant écran (6) d'au moins un quart de longueur d'onde.

3. Dispositif selon les revendications 1 ou 2,
**caractérisé en ce que**
la zone (9) entre l'extrémité libre (5) de l'antenne (4) et l'installation formant écran (6) est dimensionnée selon les dimensions des composants (8) à chauffer.

4. Dispositif selon l'une des revendications 1 à 3,
**caractérisé en ce que**
les pièces (8) introduites dans la zone (9) sont chauffées dans une région étroite en fonction des exigences respectives.

5. Dispositif selon l'une des revendications 1 à 4,
**caractérisé par**
un diélectrique (10) prévu entre l'antenne (4) et l'installation formant écran (6).

6. Dispositif selon l'une des revendications 1 à 5,
**caractérisé en ce que**
l'extrémité libre (5) de l'antenne (4) est de forme conique.

7. Dispositif selon l'une des revendications 1 à 5,
**caractérisé en ce que**
l'extrémité libre (5) de l'antenne (4) est en forme de broche.

8. Procédé de chauffage de composants en une matière plastique absorbant les micro-ondes en utilisant un dispositif selon l'une des revendications 1 à 7,
**caractérisé en ce que**
les composants (8, 8') introduits dans la zone (9, 9') du dispositif sont chauffés en volume dans la région étroite délimitée et leur chauffage est défini de manière précise.

9. Procédé selon la revendication 8,
**caractérisé en ce que**
les composants (8, 8') sont chauffés dans la zone (9, 9') entre l'extrémité libre (5, 5') de l'antenne (4) et l'installation formant écran (6) au-delà de leur température de fusion et les composants sont soudés l'un à l'autre.

10. Procédé selon la revendication 8,
**caractérisé en ce que**
les composants (8) sont chauffés dans la zone (9) entre l'extrémité libre (5) de l'antenne (4) et l'installation formant écran (6) au-delà de la température de déformation plastique et ils sont déformés de manière permanente.

11. Procédé selon la revendication 8,
**caractérisé en ce que**
dans la zone (9) entre l'extrémité libre (5) de l'antenne (4) et l'installation formant écran (6), les composants sont chauffés pour réticuler au-delà de la température de réticulation.
